# EUROPEAN PATENT SPECIFICATION

(11) **EP 3 437 791 B1**
(45) Date of publication and mention of the grant of the patent: **12.08.2020**
(21) Application number: 17775581.6
(22) Date of filing: 31.03.2017
(51) Int. Cl.: C22C 38/46, C22C 38/02, C22C 38/04, C22C 38/06, C22C 38/42, C22C 38/44, C22C 38/48, C22C 38/50, C22C 38/52, C22C 38/54, C22C 38/58, B23K 35/30, B23K 9/167, B23K 9/173, B23K 9/18, B23K 101/06, B23K 101/10, B23K 103/04, B23K 9/23, C22C 19/05

(54) **WELDED STRUCTURAL MEMBER**
GESCHWEISSTES STRUKTURELEMENT
ÉLÉMENT STRUCTUREL SOUDÉ

(30) Priority: 31.03.2016 JP 2016072162
(43) Date of publication of application: 06.02.2019
(73) Proprietor: Nippon Steel Corporation, Tokyo 100-8071 (JP)
(72) Inventor: SAGARA, Masayuki, Tokyo 100-8071 (JP); OSUKI, Takahiro, Tokyo 100-8071 (JP); KURIHARA, Shinnosuke, Tokyo 100-8071 (JP)
(74) Representative: Zimmermann & Partner Patentanwälte mbB
(86) International application number: PCT/JP2017/013735
(87) International publication number: WO 2017/171050

(56) References cited:
- EP-A1- 1 645 355
- WO-A1-99/09231
- WO-A1-2009/093676
- WO-A1-2015/129631
- JP-A- H11 277 293
- JP-A- 2001 107 196
- JP-A- 2011 147 947
- JP-B2- 4 699 162

## Description

### TECHNICAL FIELD

The present invention relates to a welding structure member.

### BACKGROUND ART

For thermal power generation boilers, industrial boilers, or other types of boilers, fossil fuel such as oil and coal is used as their fuel. Containing sulfur (S), the fossil fuel generates sulfur oxide (SOx) in its exhaust gas when burned. When the temperature of exhaust gas drops, SOx reacts with moisture in the gas to form sulfuric acid. Therefore, when coming in contact with the surface of a member at a dew-point temperature or lower, the exhaust gas condenses to cause corrosion (sulfuric acid dew point corrosion). Similarly, also in flue gas desulfurization facilities used in various industrial fields, when exhaust gas containing SOx flows therethrough, the sulfuric acid dew point corrosion occurs as the temperature of the exhaust gas drops. In conventional practices, the temperature of exhaust gas is kept at 150°C or higher to prevent the sulfuric acid dew point corrosion.

There is however a trend toward, for example, lowering the temperature of exhaust gas from a heat exchanger to or below the dew point of the sulfuric acid to collect thermal energy as effective as possible due to an increasing demand for energy seen in recent years and from the viewpoint of effective use of energy, and thus there has been a demand for materials having a resistance to sulfuric acid.

As an austenitic stainless steel that is excellent in corrosion resistance in an environment where high-concentration sulfuric acid condenses (environment where sulfuric acid at a concentration of 40 to 70% condenses at a temperature from 50 to 100°C) and that has a good hot workability, WO 99/009231 (Patent Document 1) discloses an austenitic stainless steel containing, in mass percent, C: 0.05% or less, Si: 1.0% or less, Mn: 2.0% or less, P: 0.04% or less, S: 0.01% or less, Ni: 12 to 27%, Cr: 15 to 26%, Cu: more than 3.0% to 8.0% or less, Mo: more than 2.0% to 5.0% or less, Nb: 1.0% or less, Ti: 0.5% or less, W: 5.0% or less, Zr: 1.0% or less, Al: 0.5% or less, N: less than 0.05%, Ca: 0.01% or less, B: 0.01% or less, and rare earth metal: 0.01% or less in total, with the balance being Fe and unavoidable impurities.

As a stainless steel that is resistant to sulfuric acid dew point corrosion and excellent in hot workability, JP4-346638A (Patent Document 2) discloses a stainless steel containing, in mass, C: 0.050% or less, Si: 1.00% or less, Mn: 2.00% or less, P: 0.050% or less, S: 0.0050% or less, Ni: 8.0 to 30%, Cr: 15 to 28%, Mo: more than 3% to 7% or less, Cu: more than 2% to 5% or less, N: 0.05 to 0.35%, B: more than 0.0015% to 0.010% or less, where O is 60 ppm or less, and furthermore the contents of Cu, Mo, B, and O in the alloy satisfy the relation of 10000 × B / (Mo + Cu + 1000 × O)= 1.5 to 10.0.

As an austenitic steel weld joint that exhibits a good corrosion resistance under a sulfuric acid environment and is excellent in weld crack resistance, JP2001-107196A (Patent Document 3) discloses an austenitic steel weld joint including a weld metal portion that has a chemical composition containing, in mass percent, C: 0.08% or less, Mn: 3% or less, P: 0.02% or less, Ni: 4 to 75%, Cr: 15 to 30%, Al: 0.5% or less, N: 0.1% or less, O (oxygen): 0.1% or less, at least one or more of Nb, Ta, Ti, and Zr: 0.1 to 5% in total, one or both of Mo and W: 0 to 20% in total, Co: 0 to 5%, V: 0 to 0.25%, B: 0 to 0.01%, Ca: 0 to 0.01%, Mg: 0 to 0.01%, REM: 0 to 0.01%, and further containing Si satisfying a formula of "Si ≤ 0.15(Nb + Ta + Ti + Zr) + 0.25", Cu being 0 to 8% or less and satisfying a formula of "Cu ≤ 1.5(Nb + Ta + Ti + Zr) + 4.0", and S satisfying a formula of "S ≤ 0.0015(Nb + Ta + Ti + Zr) + 0.003", with the balance substantially consisting of Fe, and the total content of Ni, Co, and Cu satisfying a formula of "Ni + Co + 2Cu ≥ 25".

WO 2015/129631 A1 (Patent Document 4) discloses a welded joint having excellent metal dusting resistance. The parent material has a composition of C: 0.03 to 0.075 %, Si: 0.6 to 2.0 %, Mn: 0.05 to 2.5 %, P: 0.04 % or less, S: 0.015 % or less, Cr: 16.0 to 23.0 %, Ni: 20.0 to 30.0 %, Cu: 0.5 to 10.0 %, Mo: less than 1 %, Al: 0.15 % or less, N: 0.005 to 0.20 %, O: 0.02 % or less, Ca: 0 to 0.1 %, REM: 0 to 0.15 %, V: less than 0.5 % and Nb: 0 to 2 %, the remainder comprising Fe and impurities. The primary material is welded with an initial layer of welding material having a composition in which the Fe content is 10 to 40 % by mass, followed by welding with a welding material having a chemical composition containing Cr: 15.0 to 30.0 % and Ni: 40.0 to 70.0 %.

EP 1 645 355 A1 (Patent Document 5) discloses an austenitic steel weld joint having a base material and a weld metal both of an austenitic steel, the weld joint exhibiting excellent toughness at low temperature and excellent resistance to hydrogen embrittlement. The weld metal has a composition of C: 0.04 % or less, Si: 1.0 % or less, Mn: 3 % or less, P: 0.02 % or less, S: 0.005 % or less, Cr: 15 to 25 %, Ni: 30 % or more, Mo: 10 % or less, Nb: 2.5 to 5 %, Al: 3.0 % or less, Ti: 0.5 % or less, and the balance being Fe and impurities, where the contents of Al and Ti satisfy (Ti + Al) > Nb / 8. The base material has a composition of C: 0.04 % or less, Si: 1.0 % or less, Mn: 3 to 30 %, P: 0.02% or less, S: 0.005 % or less, Cr: 15 to 30 %, Ni: 5 to 30 %, N: 0.10 to 0.50 %, and further contains at least one of Mn: 10 % or less, W: 10 % or less, V: 0.001 to 1.0 %, Al: 0.10 % or less, Ti: 0.01 % or less, Zr: 0.01 % or less and Hf: 0.01 % or less, with the balance being Fe and impurities.

### LIST OF PRIOR ART DOCUMENTS

### PATENT DOCUMENT

Patent Document 1: WO 99/009231
Patent Document 2: JP4-346638A
Patent Document 3: JP2001-107196A
Patent Document 4 : WO 2015/129631 A1
Patent Document 5 : EP 1 645 355 A

### SUMMARY OF INVENTION

### TECHNICAL PROBLEM

The austenitic stainless steel with the chemical compositions described in Patent Documents 1 and 2 each exhibits a good corrosion resistance under a sulfuric acid environment, as a single substance. However, when it comes to a welding structure member including such austenitic stainless steel products, bimetallic corrosion may occur, where corrosion progresses in an interface between base material and weld metal.

The austenitic steel weld joint including the weld metal that has the chemical composition described in Patent Document 3 exhibits a good corrosion resistance under a sulfuric acid environment and is excellent in weld crack resistance. However, even in the austenitic steel weld joint including the weld metal proposed in this document, the bimetallic corrosion may occur with a base material with some chemical composition.

As seen from the above, there has been no studied instance about bimetallic corrosion between base material and weld metal.

An objective of the present invention is to provide a welding structure member including an austenitic stainless steel joint that can inhibit bimetallic corrosion occurring between base material and weld metal.

### SOLUTION TO PROBLEM

To achieve the objective described above, the present inventors conducted intensive studies and consequently obtained the following findings.
(a) To give an austenitic stainless steel a good corrosion resistance in an environment where high-concentration sulfuric acid condenses, it is important to contain more than 3.0% of Cu, contain more than 2.0% of Mo, contain 15.0 to 20.0% of Cr, and control an N content to less than 0.05% so as to adjust a composition of a passivation film formed on a surface of a steel product.
(b) In general, it is known that Mo forms a tight passivation film together with Cr on a surface of a steel product, giving a good corrosion resistance to the steel product. However, as mentioned above, when a welding structure member is exposed to a corrosive environment, the problem of the bimetallic corrosion occurs. Here, in a welding structure member, it will suffice if an oxide film is formed on a surface of a weld metal, and the oxide film is a tight passivation film, but when a Mo content in the weld metal is within a range more than 0.10% to less than 6.0%, a passivation film formed on a surface of a weld metal portion is to include an instable Mo oxide film, and concentration of Ni and Cu in the passivation film is inhibited, which degrades corrosion resistance in a bimetallic corrosion environment where high-concentration sulfuric acid condenses. In contrast, when a Mo content in a weld metal is more than 6.0%, a stable passivation film containing Cr and Mo is formed on a surface of the weld metal, which makes corrosion resistance of the weld metal excellent. For that reason, it is important to control the Mo content in the base material to more than 2.0% to 5.0% or less, as well as to control the Mo content in the weld metal to 6.0% or more.
(c) In the bimetallic corrosion, unlike typical corrosions, the potential of a base (of low potential) metal becomes relatively high, and thus dissolution of Fe and Cr is accelerated. In a case where Co and/or Sn is contained in a predetermined amount in a base material of an austenitic stainless steel, it is possible to lower a dissolution rate of Fe and Cr in such a bimetallic corrosion environment, tremendously improving corrosion resistance in the bimetallic corrosion environment.

The present invention is made based on the above findings, and the scope of the present invention is as follows.

A welding structure member including an austenitic stainless steel joint, and the welding structure member has base material and weld metal, wherein,
the base material has a chemical composition containing, in mass percent:
C: 0.05% or less;
Si: 1.0% or less;
Mn: 2.0% or less;
P: 0.04% or less;
S: 0.01% or less;
Ni: 12.0 to 27.0%;
Cr: 15.0% or more to less than 20.0%;
Cu: more than 3.0% to 8.0% or less;
Mo: more than 2.0% to 5.0% or less;
Nb: 0 to 1.0%;
Ti: 0 to 0.5%;
Co: 0 to 0.5%;
Sn: 0 to 0.1%;
W: 0 to 5.0%;
Zr: 0 to 1.0%;
Al: 0 to 0.5%;
N: less than 0.05%;
Ca: 0 to 0.01%;
B: 0 to 0.01%; and
rare earth metal: 0 to 0.01% in total,
with the balance being Fe and unavoidable impurities, and
the weld metal has a chemical composition containing, in mass percent:
   C: 0.10% or less;
   Si: 0.50% or less;
   Mn: 3.5% or less;
   P: 0.03% or less;
   S: 0.03% or less;
   Cu: 0.50% or less;
   Ni: 51.0% or more to 69.0% or less;
   Cr: 14.5 to 23.0%;
   Mo: 6.0 to 17.0%;
   Al: 0.40% or less;
   one or more elements selected from Nb, Ta, and Ti: 4.90% or less in total;
   Co: 2.5% or less;
   V: 0.35% or less; and
   W: 4.5% or less,
   with the balance being Fe and unavoidable impurities.

### ADVANTAGEOUS EFFECTS OF INVENTION

According to the present invention, it is possible to inhibit the bimetallic corrosion occurring between base material and weld metal in an austenitic stainless steel joint, and thus the welding structure member is excellent in corrosion resistance in an environment where high-concentration sulfuric acid condenses (environment where sulfuric acid at a concentration of 40 to 70% condenses at a temperature of 50 to 100°C). The welding structure member is therefore optimal as one used in such an environment. Examples of the austenitic stainless steel joint include an austenitic stainless steel pipe joint.

### DESCRIPTION OF EMBODIMENTS

A welding structure member according to the present invention will be described below in detail. In the following description, the symbol "%" for contents means "percent by mass".

### 1. Chemical Composition of Base Material

Hereinafter, each chemical composition of the base material will be described in detail.

### C: 0.05% or less

C (carbon) is an element that is effective for increasing strength. C however combines with Cr to form Cr carbide in a grain boundary, resulting in deterioration in intergranular corrosion resistance. Consequently, a C content is set at 0.05% or less. A lower limit of the C content may be 0%, but an excessive reduction of the C content leads to an increase in production costs, and therefore a practical lower limit of the C content is 0.002%. As the need for increasing strength rises, it is preferable to contain more than 0.03% of C. However, when a priority is given to ensuring corrosion resistance, the C content is preferably as low as possible and desirably 0.03% or less.

### Si: 1.0% or less

Si (silicon) need not be added, but when added, Si has a deoxidation action. However, an Si content more than 1.0% contributes to deterioration in hot workability, and with Cu contained at more than 3.0%, Si at such a content makes it very difficult to work the base material into a product on an industrial scale. The Si content is therefore set at 1.0% or less. To obtain this effect reliably, it is preferable to contain 0.05% or more of Si. In a case where an A1 content is set extremely low for an increased hot workability, it is preferable to contain 0.1% or more of Si to let Si exert its deoxidation action sufficiently.

### Mn: 2.0% or less

Mn (manganese) need not be added, but when added, Mn has an action of immobilizing S to increase hot workability as well as of stabilizing an austenite phase. Containing more than 2.0% of Mn however saturates its effect, resulting only in higher costs. Consequently, the Mn content is set at 2.0% or less. To obtain the above effect reliably, it is preferable to set the Mn content at 0.1% or more.

### P: 0.04% or less

P (phosphorus) degrades hot workability and corrosion resistance, thus the lower a P content, the more preferable it is, and in particular, a P content more than 0.04% results in a significant degradation of the corrosion resistance in "the environment where high-concentration sulfuric acid condenses". Consequently, the P content is set at 0.04% or less. A lower limit of the P content may be 0%, but an excessive reduction of the P content leads to an increase in production costs, and therefore a practical lower limit of the P content is 0.003%.

### S: 0.01% or less

S (sulfur) is an element that degrades hot workability, and it is preferable to set an S content as low as possible. In particular, the S content more than 0.01% leads to a significant degradation of hot workability. Consequently, the S content is set at 0.01% or less. A lower limit of the S content may be 0%, but an excessive reduction of the S content leads to an increase in production costs, and therefore a practical lower limit of the S content is 0.0001%.

### Ni: 12.0 to 27.0%

Ni (nickel) has an action of stabilizing an austenite phase, as well as of increasing corrosion resistance in "the environment where high-concentration sulfuric acid condenses". To ensure such an effect sufficiently, it is necessary to contain Ni in an amount of 12.0% or more. Containing more than 27.0% of Ni however saturates its effect. Furthermore, being an expensive element, Ni leads to an extremely high cost and is thus uneconomical to use. Consequently, the Ni content is set at 12.0 to 27.0%. To ensure a sufficient corrosion resistance in "the environment where high-concentration sulfuric acid condenses", Ni is preferably contained in an amount more than 15.0%, still more preferably more than 20.0%.

### Cr: 15.0% or more to less than 20.0%

Cr (chromium) is an element effective to ensure the corrosion resistance of an austenitic stainless steel. In particular, in a case of an austenitic stainless steel with N restricted to a content to be described later, containing 15.0% or more of Cr, preferably 16.0% or more of Cr, with Cu and Mo in amounts to be described later enables a good corrosion resistance to be ensured in "the environment where high-concentration sulfuric acid condenses". However, containing of Cr in a large amount rather degrades the corrosion resistance in the above environment even in a case of an austenitic stainless steel with a low N content and with Cu and Mo added in combination, and the containing also causes deterioration in workability. In particular, a Cr content more than 26.0% results in a significant degradation in the corrosion resistance of an austenitic stainless steel in the above environment. In addition, to increase the hot workability of the austenitic stainless steel with Cu and Mo added in combination so as to make it easy to work the base material into a product on an industrial scale, the Cr content is preferably set at less than 20.0%, and the Cr content is consequently set at 15.0% or more to less than 20.0%.

### Cu: more than 3.0% to 8.0% or less

Cu (copper) is an element indispensable for ensuring corrosion resistance in a sulfuric acid environment. By containing more than 3.0% of Cu together with Cr in a predetermined amount and Mo in an amount to be described later, a good corrosion resistance in "the environment where high-concentration sulfuric acid condenses" can be given to an austenitic stainless steel with an N content set at a content to be described later. The larger a Cu content with Cu and Mo added in combination, the greater an advantageous effect of improving corrosion resistance, and thus the Cu content is preferably set at a content of more than 3.5%, more preferably more than 4.0%, and still more preferably more than 5.0%. Note that increasing the Cu content enables the improvement of the corrosion resistance in the above environment but causes deterioration of hot workability, and in particular, a Cu content more than 8.0% causes a significant degradation in hot workability even when an N content is set at a content to be described later. Consequently, the Cu content is set at more than 3.0% to 8.0% or less.

### Mo: more than 2.0% to 5.0% or less

Mo (molybdenum) is an element effective to ensure the corrosion resistance of an austenitic stainless steel. In particular, containing more than 2.0% of Mo together with Cr and Cu in respective predetermined amounts enables a good corrosion resistance in "the environment where high-concentration sulfuric acid condenses" to be given to an austenitic stainless steel with N in a predetermined amount. However, containing a large amount of Mo leads to deterioration in hot workability, and in particular, an Mo content more than 5.0% causes a significant deterioration in hot workability even with the predetermined N content. Consequently, the Mo content is set at more than 2.0% to 5.0% or less. To ensure a sufficient corrosion resistance in "the environment where high-concentration sulfuric acid condenses", Mo is preferably contained in an amount more than 3%.

### Nb: 0 to 1.0%

Nb (niobium) need not be added, but when added, Nb has an action of immobilizing C to increase corrosion resistance, especially intergranular corrosion resistance. However, an Nb content more than 1.0% causes formation of its nitride even with the predetermined N content, rather resulting in deterioration in corrosion resistance, and such an Nb content also leads to degradation in hot workability. Consequently, the Nb content is set at 0 to 1.0%. To obtain the above effect reliably, it is preferable to set the Nb content at 0.02% or more.

### Ti: 0 to 0.5%

Ti (titanium) need not be added, but when added, as with Nb, Ti has an action of immobilizing C to increase corrosion resistance, especially intergranular corrosion resistance. However, a Ti content more than 0.5% causes formation of its nitride even with the predetermined N content, rather resulting in deterioration in corrosion resistance, and such a Ti content also leads to degradation in hot workability. Consequently, the Ti content is set at 0 to 0.5%. To obtain the above effect reliably, it is preferable to set the Ti content at 0.01% or more.

### Co: 0 to 0.5%

### Sn: 0 to 0.1%

As mentioned above, in the bimetallic corrosion, unlike typical corrosions, the potential of a base (of low potential) metal becomes relatively high, and thus dissolution of Fe and Cr is accelerated. In such a bimetallic corrosion environment, Co and Sn are elements that can lower a dissolution rate of Fe and Cr, tremendously improving corrosion resistance in the bimetallic corrosion environment. For that reason, one or more of these elements are preferably contained. The above effect becomes pronounced with 0.01% or more of Co or 0.001% or more of Sn. However, excessively containing these elements results in deterioration in producibility. Therefore, an upper limit of the Co content is set at 0.5%, and an upper limit of the Sn content is set at 0.1%.

### W: 0 to 5.0%

W (tungsten) need not be added, but when added, W exerts an action of increasing corrosion resistance in "the environment where high-concentration sulfuric acid condenses". Containing more than 5.0% of W however saturates its effect, resulting only in higher costs. Consequently, a W content is set at 0 to 5.0%. To obtain the above effect reliably, it is preferable to set the W content at 0.1% or more.

### Zr: 0 to 1.0%

Zr (zirconium) need not be added, but when added, Zr has an action of increasing corrosion resistance in "the environment where high-concentration sulfuric acid condenses". Containing more than 1.0% of Zr however saturates its effect, resulting only in higher costs. A Zr content is therefore set at 0 to 1.0%, and to obtain the above effect reliably, it is preferable to set the Zr content at 0.02% or more.

### Al: 0 to 0.5%

A1 (aluminum) need not be added, but when added, Al has a deoxidation action. However, an Al content more than 0.5% results in deterioration in hot workability even in an austenitic stainless steel with a predetermined N content. Consequently, the Al content is set at 0 to 0.5%. A lower limit of the Al content may be within a range of unavoidable impurities. Note that Al has a deoxidation action, and therefore in a case where the Si content described above is set extremely low, it is preferable to contain 0.02% or more of Al to let Al exert its deoxidation action sufficiently. To let Al exert its deoxidation action sufficiently even in a case where 0.05% or more of Si is contained, it is preferable to set the Al content at 0.01% or more.

### N: less than 0.05%

N (nitrogen) has been positively added for stabilizing an austenitic structure and increasing a resistance to "local corrosion" such as pitting and crevice corrosion. However, in "the environment where high-concentration sulfuric acid condenses", which is a topic of the present invention, an N content of 0.05% or more rather results in deterioration in corrosion resistance of an austenitic stainless steel containing more than 3.0% of Cu, more than 2.0% of Mo, and 15.0% or more to less than 20.0% of Cr. Furthermore, even with upper limits of Cu and Mo contents set at 8.0% and 5.0%, respectively, the N content of 0.05% or more results in deterioration in hot workability. For that reason, to give an austenitic stainless steel corrosion resistance and hot workability in "the environment where high-concentration sulfuric acid condenses", the N content is set less than 0.05%. The lower the N content is, the more preferable it is. A lower limit of the N content may be 0%, but an excessive reduction of the N content leads to an increase in production costs, and therefore a practical lower limit of the N content is 0.0005%.

### Ca: 0 to 0.01%

Ca (calcium) need not be added, but when added, Ca combines with S to have an effect of curbing deterioration in hot workability. However, a Ca content more than 0.01% results in deterioration in cleanliness of the steel, causing a defect to occur in production perform as a hot processing. Consequently, the Ca content is set at 0 to 0.01%. To obtain the above effect reliably, it is preferable to set the Ca content at 0.0005% or more. A more preferable lower limit of the Ca content is 0.001%.

### B: 0 to 0.01%

B (boron) need not be added, but when added, B has an effect of improving hot workability. However, adding B in a large quantity promotes precipitation of Cr-B compound in a grain boundary, leading to deterioration of corrosion resistance. In particular, a B content more than 0.01% results in a significant degradation in corrosion resistance. Consequently, the B content is set at 0 to 0.01%. To obtain the above effect reliably, it is preferable to set the B content at 0.0005% or more. A more preferable lower limit of the B content is 0.001%.

### Rare earth metal: 0 to 0.01% in total

Rare earth metal need not be added, but when added, the rare earth metal has an action of increasing hot workability. However, a content of the rare earth metal more than 0.01% in total results in deterioration in cleanliness of the steel, causing a defect to occur in production perform as a hot processing. Consequently, the content of the rare earth metal is set at 0.01% or less in total. To obtain the above effect reliably, the content of the rare earth metal is preferably set at 0.0005% or more in total. Note that the rare earth metal is a generic term for Sc, Y, and lanthanoids, 17 elements in total.

The chemical composition of the base material contains the above elements within the respective defined ranges, with the balance being Fe and unavoidable impurities.

### 2. Chemical Composition of Weld Metal

Next, a chemical composition of weld metal will be described below in detail.

### C: 0.10% or less

C (carbon) is an element that stabilizes an austenite phase being a matrix. However, excessively adding C causes Cr carbo-nitride to generate through welding heat cycle, leading degradation of corrosion resistance and causing deterioration in strength. Furthermore, C reacts with Si segregating in a grain boundary and with Fe in a matrix to form compounds having low fusing points, increasing reheat cracking susceptibility. Consequently, a C content is set at 0.10% or less. A preferable upper limit of the C content is 0.03%. The lower the C content, the more preferable it is, but excessive reduction of the C content leads to increase in costs, and therefore a lower limit of the C content may be 0.005%.

### Si: 0.50% or less

Si (silicon) is added as a deoxidizer, but while the weld metal is being solidified, Si segregates in a crystal grain boundary and reacts with C and Fe that is in a matrix, so as to form compounds having low fusing points, causing reheat cracking during multi-layer welding. Consequently, a Si content is set at 0.50% or less. The lower an Si content is, the more preferable it is, and in a case where Al, Mn, or other elements sufficient for deoxidation is contained, Si does not necessarily have to be added. As the need for obtaining deoxidation effect rises, it is preferable to contain 0.02% or more of Si.

### Mn: 3.5% or less

Mn (manganese) is added as a deoxidizer and stabilizes an austenite phase being a matrix. However, excessively adding Mn contributes to formation of intermetallic compound to leads to embrittlement in a long time use at high temperature. Consequently, an Mn content is set at 3.5% or less. A preferable upper limit of the Mn content is 2.0%. There is no need to define a particular lower limit of the Mn content. The Mn content may be 0% in a case where other elements (Si, Al) sufficiently perform deoxidation.

### P: 0.03% or less

P (phosphorus) is an unavoidable impurity, and while the weld metal is being solidified during welding, P segregates in a final solidified portion, lowering a fusing point of a residual liquid phase, which causes solidification cracking to occur. Consequently, a P content is set at 0.03% or less. A preferable upper limit of the P content is 0.015%. The lower the P content is set, the more preferable it is unless the setting raises a problem about production costs. A lower limit of the P content may be 0%, but an excessive reduction of the P content leads to an increase in production costs, and therefore a practical lower limit of the P content is 0.003%.

### S: 0.03% or less

S (sulfur) is an unavoidable impurity as with P described above, and while the weld metal is being solidified during welding, S forms a eutectic having a lower fusing point to cause solidification cracking, and the eutectic segregates in a crystal grain boundary, resulting in decrease in sticking force of the grain boundary and causing reheat cracking to occur. Consequently, an S content is set at 0.03% or less. A preferable upper limit of the P content is 0.015%. The lower the S content is set, the more preferable it is unless the setting raises a problem about production costs. A lower limit of the S content may be 0%, but an excessive reduction of the S content leads to an increase in production costs, and therefore a practical lower limit of the S content is 0.0001%.

### Cu: 0.50% or less

Cu (copper) is an element effective for improving corrosion resistance in a high-concentration sulfuric acid environment. However, containing more than 0.50% of Cu results in decrease a fusing point of a liquid phase in final solidification and causing solidification cracking. In addition, Cu segregates in a crystal grain boundary in solidification to decrease sticking force of the grain boundary, leading to reheat cracking during multi-layer welding. Consequently, a Cu content is set at 0.50% or less. A lower limit of the Cu content may be 0%, but an excessive reduction of the Cu content leads to an increase in production costs, and therefore a practical lower limit of the Cu content is 0.01%.

### Ni: 51.0% or more to 69.0% or less

Ni (nickel) is an element indispensable for stabilizing an austenite phase being a matrix, and for ensuring corrosion resistance in an environment containing high-concentration sulfuric acid. However, excessively adding Ni results in increase in weld cracking susceptibility, as well as in increased costs since Ni is an expensive element. For this reason, an Ni content is set at 51.0% or more to 69.0% or less.

### Cr: 14.5 to 23.0%

Cr (chromium) is an element effective to ensure oxidation resistance and corrosion resistance at high temperature and an element indispensable for ensuring corrosion resistance in an environment containing high-concentration sulfuric acid. To ensure sufficient oxidation resistance and corrosion resistance, 14.5% or more of a Cr content is needed. However, excessively adding Cr results in degradation in corrosion resistance as well as a significant degradation in workability. For that reason, the Cr content is set at 14.5 to 23.0%.

### Mo: 6.0 to 17.0%

Mo (molybdenum) has been considered to be an element effective to improve, when added, corrosion resistance in a high-concentration sulfuric acid environment, but in a case of a joint including the base material having the chemical composition described above, containing Mo within a range more than 0.10% to less than 6.0% in the weld metal causes a potential difference between a passivation film formed on a surface of the weld metal and a passivation film formed on a surface of the base material, which makes bimetallic corrosion likely to occur. Thus, by controlling an Mo content in the weld metal to 6.0% or more, it is possible to form an Mo film in a sufficient amount, improving corrosion resistance. In contrast, an excessively high Mo content in the weld metal leads to formation of carbide and intermetallic compound in use, causing degradation in corrosion resistance and toughness. For that reason, the Mo content is set at 6.0 to 17.0%.

### Al: 0.40% or less

Al (aluminum) is added as a deoxidizer, but when contained in a large amount, Al forms slag during welding to degrade fluidity of the weld metal and uniformity of a weld bead, resulting in a significant deterioration in welding operability. In addition, containing Al in a large amount narrows a welding condition region for formation of penetration bead. For that reason, it is necessary to set an Al content at 0.40% or less. An upper limit of the Al content is preferably 0.30%, more preferably 0.20%. The less the Al content, the more preferable it is, and the Al content may be 0%. However, an excessive reduction of the Al content leads to an increase in production costs, and therefore a practical lower limit of the Al content is 0.001%.

### One or more elements selected from Nb, Ta, and Ti: 4.90% or less in total

Ti, Nb, and Ta immobilize C in the weld metal in a form of their carbides, and form their oxides with S to improve sticking force of a crystal grain boundary. In addition, Ti, Nb, and Ta crystallize carbides to complicate a shape of the crystal grain boundary, and disperse crystal grain boundary segregation of S and Cu to prevent reheat cracking during multi-pass welding. However, when a total content of one or more elements selected from Nb, Ta, and Ti is more than 4.90%, such a total content leads to coarsening of their carbides, leading to degradation in toughness and degrading workability. Therefore, the total content of one or more elements selected from Nb, Ta, and Ti is set at 4.90% or less. A lower limit of this total content is preferably set at 2.0.

### Co: 2.5% or less

Co (cobalt) need not be added, but when added, as with Ni, Co is an element effective to stabilize an austenite phase and to improve corrosion resistance in a high-concentration sulfuric acid environment. However, Co is a very expensive element compared with Ni, and therefore adding Co in a large amount leads to increase in costs. Consequently, a Co content is set at 2.5% or less. A preferable upper limit of the Co content is 2.0%, and a more preferable upper limit of the Co content is 1.5%. The above effect becomes pronounced with 0.5% or more of Co.

### V: 0.35% or less

V (vanadium) need not be added, but when added, V is an element effective to improve high temperature strength. However, an excessive addition of V causes its carbo-nitride to precipitate in a large quantity, leading to deterioration in toughness. For this reason, a V content is preferably set at 0.35% or less. The above effect becomes pronounced with 0.05% or more of V.

### W: 4.5% or less

W (tungsten) need not be added, but when added, W is an element effective to improve corrosion resistance in a high-concentration sulfuric acid environment. However, a W content more than 4.5% results not only in saturation of the effect of W but also in formation of carbide and intermetallic compound in use, rather causing degradation in corrosion resistance and toughness. The W content is set at 4.5% or less. The above effect becomes pronounced with 1.0% or more of W.

The chemical composition of the weld metal contains the above elements within the respective defined ranges, with the balance being Fe and unavoidable impurities.

### 3. Chemical Composition of Welding Material

As a welding material used for welding the base material having the above chemical composition to obtain the weld metal having the above chemical composition, one having the following chemical composition is preferably used.

Specifically, as the welding material, it is preferable to use a welding material having a chemical composition containing
C: 0.08% or less,
Si: 2.0% or less,
Mn: 3.2% or less,
P: 0.02% or less,
S: 0.02% or less,
Ni: 4.0 to 69.0%,
Cr: 15.0 to 30.0%
Al: 0.5% or less,
one or more elements selected from Nb, Ta, and Ti: 4.90% or less in total,
Mo: 6.0 to 17.0%,
W: 0 to 4.5%,
Co: 0 to 5.0%,
Cu: 0 to 8.0%,
V: 0 to 0.25%,
B: 0 to 0.01%,
Ca: 0 to 0.01%,
Mg: 0 to 0.01%, and
rare earth metal: 0 to 0.01% in total,
with the balance: Fe and unavoidable impurities.

The reasons for restricting the elements are as follows.

### C: 0.08% or less

A C (carbon) content is preferably 0.08% or less to give the weld metal a sufficient performance. The lower limit of the C content may be 0% but is preferably 0.002% to obtain the above effect.

### Si: 2.0% or less

A Si (silicon) content is preferably 2.0% or less because the Si content more than 2.0% results in a significant degradation in hot workability during producing the welding material, and increases the Si content in the weld metal to increase reheat cracking susceptibility. The lower limit of the Si content may be 0% but is preferably 0.02% to obtain the above effect.

### Mn: 3.2% or less

An Mn (manganese) content is preferably 3.2% or less because the Mn content more than 3.2% results in degradation in hot workability during producing the welding material, and leads to occurrence of a lot of fume during welding. The lower limit of the Mn content may be 0% but is preferably 0.01% to obtain the above effect.

### P: 0.02% or less

A P (phosphorus) content is preferably 0.02% or less because P is an unavoidable impurity, and while the weld metal is being solidified during welding, P segregates in a final solidified portion, lowering a fusing point of a residual liquid phase, which causes solidification cracking to occur. A lower limit of the P content may be 0%, but an excessive reduction of the P content leads to an increase in production costs, and therefore a practical lower limit of the P content is 0.003%.

### S: 0.02% or less

An S (sulfur) content is preferably 0.02 or less because the S content more than 0.02% results in deterioration in hot workability during producing the welding material, and increases the S content in the weld metal to increase solidification cracking susceptibility and reheat cracking susceptibility. A lower limit of the S content may be 0%, but an excessive reduction of the S content leads to an increase in production costs, and therefore a practical lower limit of the S content is 0.0001%.

### Ni: 4.0 to 69.0%

Ni (nickel) is an element indispensable for stabilizing an austenite phase being a matrix, and for ensuring corrosion resistance in an environment containing high-concentration sulfuric acid. However, excessively adding Ni results in increase in weld cracking susceptibility, as well as in increased costs since Ni is an expensive element. Consequently, the Ni content is set at 4.0 to 69.0%. Note that an amount of Ni preferably satisfies Ni + Co + 2Cu ≥ 25.

### Cr: 15.0 to 30.0%

A Cr (chromium) content is preferably 15.0 to 30.0% to give the weld metal a sufficient reheat cracking resistance.

### Al: 0.5% or less

Al (aluminum) is added as a deoxidizer, but when contained in a large amount, Al forms slag during welding to degrade fluidity of the weld metal and uniformity of a weld bead, resulting in a significant deterioration in welding operability. For that reason, the Al content is preferably 0.5% or less. A lower limit of the Al content may be 0%, but an excessive reduction of the Al content leads to an increase in production costs, and therefore a practical lower limit of the Al content is 0.01%.

### One or more elements selected from Nb, Ta, and Ti: 4.90% or less in total

Ti, Nb, and Ta immobilize C in the weld metal in a form of their carbides, and form their oxides with S to improve sticking force of a crystal grain boundary. In addition, Ti, Nb, and Ta crystallize carbides to complicate a shape of the crystal grain boundary, and disperse crystal grain boundary segregation of S and Cu to prevent reheat cracking during multi-pass welding. However, when a total content of one or more elements selected from Nb, Ta, and Ti in the weld metal is more than 4.90%, such a total content leads to coarsening of their carbides, leading to degradation of toughness and degrading workability. For that reason, the total content of these elements in the welding material need be limited, and specifically, the total content of one or more elements selected from Nb, Ta, and Ti is preferably set at 4.90% or less. A lower limit of this total content is preferably set at 2.0.

### Mo: 6.0 to 17.0%

Mo (molybdenum) has been considered to be an element effective to improve, when added, corrosion resistance in a high-concentration sulfuric acid environment, but in a case of a joint including the base material having the chemical composition described above, containing Mo within a range more than 0.10% to less than 6.0% in the weld metal causes a potential difference between a passivation film formed on a surface of the weld metal and a passivation film formed on a surface of the base material, which makes bimetallic corrosion likely to occur. Thus, by controlling a Mo content in the weld metal to 6.0% or more, it is possible to form a Mo film in a sufficient amount, improving corrosion resistance. In contrast, an excessively high Mo content in the weld metal leads to formation of carbide and intermetallic compound in use, causing degradation in corrosion resistance and toughness. For that reason, the Mo content is set at 6.0 to 17.0%.

### W: 0 to 4.5%

Being contained in the weld metal, W (tungsten) is an element effective to improve corrosion resistance in a high-concentration sulfuric acid environment, and thus W may be contained in the welding material. However, a W content more than 4.5% results not only in saturation of the effect of W but also in formation of carbide and intermetallic compound in use, rather causing degradation in corrosion resistance and toughness. Consequently, the W content is preferably set at 0 to 4.5%. The above effect becomes pronounced with 1.0% or more of W.

### Co: 0 to 5.0%

Co (cobalt) need not be contained, but when contained, a Co content is preferably 5.0% or less to give the weld metal a performance required as such.

### Cu: 0 to 8.0%

Cu (copper) need not be contained, but when contained, a Cu content is preferably 8.0% or less because the Cu content more than 8.0% results in a significant deterioration in hot workability during producing the welding material.

### V: 0 to 0.25%

V (vanadium) need not be contained, but when contained, a V content is preferably 0.25% or less to give the weld metal a performance required as such.

### B: 0 to 0.01%

B (boron) need not be contained, but when contained, a B content is preferably 0.01% or less to give the weld metal a performance required as such.

### Ca: 0 to 0.01%

### Mg: 0 to 0.01%

### rare earth metal: 0 to 0.01% in total

Each of Ca, Mg, and the rare earth metal need not be contained, but when contained, the content of each element is preferably 0.01% or less to give the weld metal a performance required as such.

### 4. Producing Method for Weld Joint

The above weld joint achieved by the present invention can be produced by welding techniques including, for example, the gas shield arc welding technique represented by the tungsten inert gas (TIG) technique, MIG technique, and the like, the shielded metal arc welding technique, and the submerged arc welding technique. Above all, the TIG technique is preferably employed.

### Example 1

Ingots having various chemical composition shown in Table 1 and each weighing 50 kg were produced, and each of the ingots was subjected to hot forging and hot rolling into a steel sheet having a thickness of 11 mm. This steel sheet was subjected to solution heat treatment (1100°C × 30 min) to be formed into sheet materials each measuring 300 mmL × 50 mmW × 10 mmt.

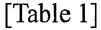

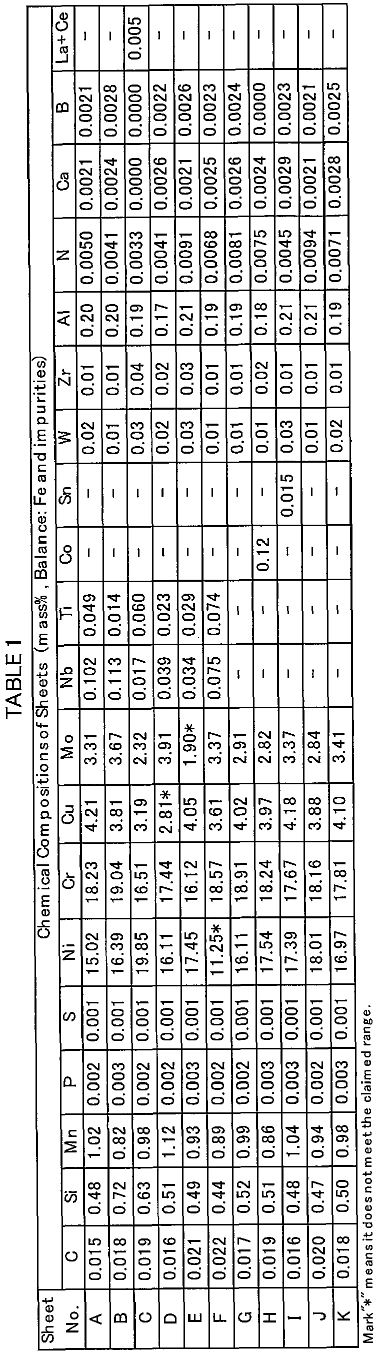

One end of each of two sheet materials was subjected to preparation of weld groove, TIG welding was then performed on the two sheet materials abutting each other, and a weld joint was thereby obtained. Welding materials having chemical compositions shown in Table 2 were used. The chemical composition of a weld metal portion was analyzed by the X-ray fluorescence analysis, the results of which are shown in Table 3.

### [Table 2]

**TABLE 2**

| Welding Material No. | Chemical Compositions of Welding Materials (mass% , Balance: Fe and impurities) | | | | | | | | | | | | | |
|---|---|---|---|---|---|---|---|---|---|---|---|---|---|---|
| | C | Si | Mn | P | S | Ni | Cr | Cu | Mo | Nb+Ta+Ti | W | Al | Co | V |
| a | 0.012 | 0.02 | 0.02 | 0.003 | 0.001 | 65.68 | 22.07 | 0.01 | 8.12 | 3.62 | - | 0.20 | - | - |
| b | 0.032 | 0.12 | 3.11 | 0.004 | 0.002 | 68.45 | 18.25 | 0.31 | 6.24 | 2.42 | - | - | - | - |
| c | 0.015 | 0.14 | 0.42 | 0.012 | 0.002 | 56.33 | 15.76 | 0.04 | 16.08 | 0.00 | 3.54 | - | 1.17 | 0.02 |
| d | 0.019 | 0.10 | 0.12 | 0.005 | 0.003 | 46.17 | 20.51 | 0.03 | 7.12 | 3.31 | - | 0.18 | - | - |
| e | 0.027 | 0.14 | 2.84 | 0.002 | 0.003 | 71.59 | 14.1 | 0.02 | - | 2.88 | - | - | - | - |
| f | 0.017 | 0.77 | 0.51 | 0.015 | 0.001 | 54.21 | 15.81 | 0.05 | 20.12 | - | - | - | 1.09 | 0.02 |
| g | 0.018 | 0.13 | 0.15 | 0.005 | 0.002 | 46.84 | 22.31 | 0.37 | 5.49 | 3.37 | - | 0.19 | - | - |
| h | 0.019 | 0.51 | 0.61 | 0.019 | 0.002 | 53.21 | 18.39 | 0.03 | 5.61 | 2.19 | - | 0.11 | - | - |

### [Table 3]

**TABLE 3**

| | Sheet No. | W elding Material No. | Chemical Com positions of Weld Metals (mass% , Balance: Fe and im purities) | | | | | | | | | | | | | | |
|---|---|---|---|---|---|---|---|---|---|---|---|---|---|---|---|---|---|
| | | | C | Si | Mn | P | S | Ni | Cr | Cu | Mo | Nb+Ta+Ti | W | Al | Co | V | Sn |
| Inventive Ex.1 | A | a | 0.012 | 0.02 | 0.03 | 0.003 | 0.001 | 65.17 | 22.03 | 0.05 | 8.07 | 3.59 | - | 0.20 | - | - | 0.000 |
| Inventive Ex.2 | A | b | 0.032 | 0.12 | 3.09 | 0.004 | 0.002 | 67.86 | 18.25 | 0.35 | 6.21 | 2.40 | - | - | - | - | 0.000 |
| Inventive Ex.3 | B | c | 0.015 | 0.14 | 0.42 | 0.012 | 0.002 | 56.01 | 15.79 | 0.07 | 15.98 | - | 3.51 | - | 1.16 | 0.02 | 0.000 |
| Inventive Ex.4 | B | a | 0.012 | 0.03 | 0.03 | 0.003 | 0.001 | 65.24 | 22.04 | 0.04 | 8.08 | 3.59 | - | 0.20 | - | - | 0.000 |
| Inventive Ex.5 | C | b | 0.032 | 0.13 | 3.09 | 0.004 | 0.002 | 67.92 | 18.23 | 0.34 | 6.20 | 2.39 | - | - | - | - | 0.000 |
| Inventive Ex.6 | C | c | 0.015 | 0.14 | 0.42 | 0.012 | 0.002 | 56.07 | 15.77 | 0.06 | 15.98 | - | 3.52 | - | 1.16 | 0.02 | 0.000 |
| Comparative Ex.1 | D | a | 0.012 | 0.03 | 0.03 | 0.003 | 0.001 | 65.09 | 22.01 | 0.04 | 8.07 | 3.58 | - | 0.20 | - | - | 0.000 |
| Comparative Ex.2 | E | b | 0.032 | 0.12 | 3.09 | 0.004 | 0.002 | 67.99 | 18.23 | 0.34 | 6.20 | 2.40 | - | - | - | - | 0.000 |
| Comparative Ex.3 | F | a | 0.012 | 0.02 | 0.03 | 0.003 | 0.001 | 65.24 | 22.04 | 0.04 | 8.08 | 3.59 | - | 0.20 | - | - | 0.000 |
| Comparative Ex.4 | A | d | 0.019 | 0.11 | 0.13 | 0.005 | 0.003 | 45.73* | 20.48 | 0.09 | 7.07 | 3.27 | - | 0.18 | - | - | 0.000 |
| Comparative Ex.5 | C | e | 0.027 | 0.15 | 2.82 | 0.002 | 0.003 | 70.92* | 14.13* | 0.06 | 0.03* | 2.84 | - | - | - | - | 0.000 |
| Comparative Ex.6 | B | f | 0.017 | 0.77* | 0.51 | 0.015 | 0.001 | 53.76 | 15.85 | 0.10 | 19.92* | - | - | - | 1.08 | 0.02 | 0.000 |
| Comparative Ex.7 | C | g | 0.018 | 0.13 | 0.16 | 0.005 | 0.002 | 46.65* | 22.27 | 0.39 | 5.47* | 3.37 | - | 0.19 | - | - | 0.000 |
| Inventive Ex.7 | G | a | 0.013 | 0.03 | 0.03 | 0.003 | 0.001 | 65.20 | 22.02 | 0.03 | 8.09 | 3.61 | - | 0.20 | - | - | 0.000 |
| Inventive Ex.8 | H | b | 0.031 | 0.13 | 3.10 | 0.004 | 0.002 | 67.89 | 18.24 | 0.32 | 6.23 | 2.39 | - | - | - | - | 0.000 |
| Inventive Ex.9 | I | c | 0.015 | 0.15 | 0.44 | 0.012 | 0.002 | 56.18 | 15.87 | 0.06 | 16.01 | - | 3.49 | - | 1.12 | 0.02 | 0.000 |
| Comparative Ex.8 | C | h | 0.019 | 0.51* | 0.61 | 0.018 | 0.002 | 53.14 | 18.30 | 0.05 | 5.59* | 2.15 | - | 0.11 | - | - | 0.000 |
| Inventive Ex.10 | J | b | 0.031 | 0.12 | 3.09 | 0.004 | 0.002 | 68.21 | 18.23 | 0.33 | 6.21 | 2.37 | - | - | - | - | 0.000 |
| Inventive Ex.11 | K | c | 0.015 | 0.15 | 0.44 | 0.011 | 0.002 | 56.10 | 15.81 | 0.05 | 15.96 | - | 3.51 | - | 1.17 | 0.02 | 0.000 |

| | | | | | | | | | | | | | | | | | |
|---|---|---|---|---|---|---|---|---|---|---|---|---|---|---|---|---|---|
| Mark"∗" means it does not meet the claim ed range. | | | | | | | | | | | | | | | | | |

From the obtained weld joint, a corrosion test specimen (10 mmL × 70 mmW × 3 mmt) with a weld metal portion included at the center thereof was taken, which was subjected to a corrosion test.

In the corrosion test, the corrosion test specimen was immersed in a 50%H₂SO₄ solution kept at 100°C for 336 h, and from a mass reduction of the corrosion test specimen, a corrosion rate (the rate of corrosion of the entire test specimen) was calculated. In addition, a corrosion thinning (a maximum value) in an interface between a base material and the weld metal portion was measured. Meanwhile, from the base material and weld metal portion of the above weld joint, a test specimen (7 mmL × 7 mmW × 2 mmt) was cut and its corrosion potential was measured in a 50%H₂SO₄ solution kept at 100°C, and a potential difference (the corrosion potential of the weld metal portion - the corrosion potential of the base material) was calculated. The results of them are shown in Table 4.

### [Table 4]

**TABLE 4**

| | Sheet No. | Welding Material No. | Corrosion Rate g/m²/h | Corrosion Thinning µm | Potential Difference mV |
|---|---|---|---|---|---|
| Inventive Ex.1 | A | a | 0.12 | < 10 | 16 |
| Inventive Ex.2 | A | b | 0.09 | < 10 | 18 |
| Inventive Ex.3 | B | c | 0.07 | < 10 | 15 |
| Inventive Ex.4 | B | a | 0.13 | < 10 | 8 |
| Inventive Ex.5 | C | b | 0.08 | < 10 | 17 |
| Inventive Ex.6 | C | c | 0.1 | < 10 | 11 |
| Comparative Ex.1 | D | a | 5.23 | 120 | 50 |
| Comparative Ex.2 | E | b | 4.67 | 80 | 42 |
| Comparative Ex.3 | F | a | 10.05 | 420 | 60 |
| Comparative Ex.4 | A | d | 1.61 | 520 | -43 |
| Comparative Ex.5 | C | e | 2.54 | 680 | -51 |
| Comparative Ex.6 | B | f | 0.89 | 50 | 80 |
| Comparative Ex.7 | C | g | 3.85 | 370 | -48 |
| Inventive Ex.7 | G | a | 0.29 | 17 | 14 |
| Inventive Ex.8 | H | b | 0.02 | <10 | 9 |
| Inventive Ex.9 | I | c | 0.02 | < 10 | 11 |
| Comparative Ex.8 | C | h | 3.56 | 320 | -41 |
| Inventive Ex.10 | J | b | 0.21 | 21 | 19 |
| Inventive Ex.11 | K | c | 0.23 | 24 | 22 |

As shown in Table 4, in each of comparative examples 1 to 3, the chemical composition of the base material fell out of the ranges defined in the present invention, and in each of comparative examples 4 to 8, the chemical composition of the weld metal (particularly, the Mo content) fell out of the ranges defined in the present invention. As a result, all of the comparative examples showed large potential differences between the base material and the weld metal, and the comparative examples had degraded corrosion resistances. In contrast, examples 1 to 11 all showed small potential difference between the base material and the weld metal, and the examples 1 to 11 had good corrosion resistances. In particular, the examples 8 and 9 including base material containing Co or Sn had better corrosion resistances.

### INDUSTRIAL APPLICABILITY

According to the present invention, it is possible to inhibit the bimetallic corrosion occurring between base material and weld metal in an austenitic stainless steel joint, and thus the welding structure member is excellent in corrosion resistance in an environment where high-concentration sulfuric acid condenses (environment where sulfuric acid at a concentration of 40 to 70% condenses at a temperature of 50 to 100°C). The welding structure member is therefore optimal as one used in such an environment.

## Claims

1. A welding structure member including an austenitic stainless steel joint, and the welding structure member has base material and weld metal, wherein,
the base material has a chemical composition containing, in mass percent:
C: 0.05% or less;
Si: 1.0% or less;
Mn: 2.0% or less;
P: 0.04% or less;
S: 0.01% or less;
Ni: 12.0 to 27.0%;
Cr: 15.0% or more to less than 20.0%;
Cu: more than 3.0% to 8.0% or less;
Mo: more than 2.0% to 5.0% or less;
Nb: 0 to 1.0%;
Ti: 0 to 0.5%;
Co: 0 to 0.5%;
Sn: 0 to 0.1%;
W: 0 to 5.0%;
Zr: 0 to 1.0%;
Al: 0 to 0.5%;
N: less than 0.05%;
Ca: 0 to 0.01%;
B: 0 to 0.01%; and
rare earth metal: 0 to 0.01% in total,
with the balance being Fe and unavoidable impurities, and
the weld metal has a chemical composition containing, in mass percent:
C: 0.10% or less;
Si: 0.50% or less;
Mn: 3.5% or less;
P: 0.03% or less;
S: 0.03% or less;
Cu: 0.50% or less;
Ni: 51.0% or more to 69.0% or less;
Cr: 14.5 to 23.0%;
Mo: 6.0 to 17.0%;
Al: 0.40% or less;
one or more elements selected from Nb, Ta, and Ti: 4.90% or less in total;
Co: 2.5% or less;
V: 0.35% or less; and
W: 4.5% or less,
with the balance being Fe and unavoidable impurities.

2. The welding structure member according to claim 1, wherein the chemical composition of the base material contains, in mass percent:
Co: 0.01 to 0.5%; and/or
Sn: 0.001 to 0.1%.

## Patentansprüche

1. Schweißstrukturelement mit einer Verbindung aus austenitischem rostfreiem Stahl, und wobei das Schweißstrukturelement ein Basismaterial und ein Schweißmetall aufweist, wobei das Basismaterial eine chemische Zusammensetzung aufweist, die in Massenprozent enthält:
C: 0,05% oder weniger;
Si: 1,0% oder weniger;
Mn: 2,0% oder weniger;
P: 0,04% oder weniger;
S: 0,01% oder weniger;
Ni: 12,0 bis 27,0%;
Cr: 15,0% oder mehr bis weniger als 20,0%;
Cu: mehr als 3,0% bis 8,0% oder weniger;
Mo: mehr als 2,0% bis 5,0% oder weniger;
Nb: 0 bis 1,0%;
Ti: 0 bis 0,5%;
Co: 0 bis 0,5%;
Sn: 0 bis 0,1%;
W: 0 bis 5,0%;
Zr: 0 bis 1,0%;
Al: 0 bis 0,5%;
N: weniger als 0,05 %;
Ca: 0 bis 0,01%;
B: 0 bis 0,01%; und
Seltenerdmetall: 0 bis 0,01% insgesamt,
wobei der Rest Fe und unvermeidbare Verunreinigungen sind, und
das Schweißgut eine chemische Zusammensetzung hat, die in Massenprozent enthält:
C: 0,10 % oder weniger;
Si: 0,50% oder weniger;
Mn: 3,5% oder weniger;
P: 0,03% oder weniger;
S: 0,03% oder weniger;
Cu: 0,50% oder weniger;
Ni: 51,0% oder mehr bis 69,0% oder weniger;
Cr: 14,5 bis 23,0%;
Mo: 6,0 bis 17,0%;
Al: 0,40% oder weniger;
ein oder mehrere aus Nb, Ta und Ti ausgewählte Elemente: 4,90% oder weniger insgesamt;
Co: 2,5% oder weniger;
V: 0,35 % oder weniger; und
W: 4,5 % oder weniger,
wobei der Rest Fe und unvermeidbare Verunreinigungen sind.

2. Das Schweißstrukturelement nach Anspruch 1, wobei die chemische Zusammensetzung des Basismaterials in Massenprozent enthält:
Co: 0,01 bis 0,5%; und/oder
Sn: 0,001 bis 0,1%.

## Revendications

1. Elément de structure de soudage incluant un joint d'acier inoxydable austénitique, et l'élément de structure de soudage présente un matériau de base et un métal de soudure, dans lequel,
le matériau de base présente une composition chimique contenant, en pourcent en masse :
C : 0,05 % ou inférieur ;
Si : 1,0 % ou inférieur ;
Mn : 2,0 % ou inférieur ;
P : 0,04 % ou inférieur ;
S : 0,01 % ou inférieur ;
Ni : 12,0 à 27,0 % ;
Cr : 15,0 % ou supérieur à moins de 20,0 % ;
Cu : plus de 3,0 % à 8,0 % ou inférieur ;
Mo : plus de 2,0 % à 5,0 % ou inférieur ;
Nb : 0 à 1,0 % ;
Ti : 0 à 0,5 % ;
Co : 0 à 0,5 % ;
Sn : 0 à 0,1 % ;
W : 0 à 5,0 % ;
Zr : 0 à 1,0 % ;
Al : 0 à 0,5 % ;
N : moins de 0,05 % ;
Ca : 0 à 0,01 % ;
B : 0 à 0,01 % ; et
élément de terres rares : 0 à 0,01 % au total,
avec le reste étant Fe et des impuretés inévitables, et
le métal de soudure présente une composition chimique contenant, en pourcent en masse :
C : 0,10 % ou inférieur ;
Si : 0,50 % ou inférieur ;
Mn : 3,5 % ou inférieur ;
P : 0,03 % ou inférieur ;
S : 0,03 % ou inférieur ;
Cu : 0,50 % ou inférieur ;
Ni : 51,0 % ou supérieur à 69,0 % ou inférieur ;
Cr : 14,5 à 23,0 % ;
Mo : 6,0 à 17,0 % ;
Al : 0,40 % ou inférieur ;
un ou plusieurs éléments choisis parmi Nb, Ta, et Ti : 4,90 % ou inférieur au total ;
Co : 2,5 % ou inférieur ;
V : 0,35 % ou inférieur ; et
W : 4,5 % ou inférieur,
avec le reste étant Fe et des impuretés inévitables.

2. Elément de structure de soudage selon la revendication 1, dans lequel la composition chimique du matériau de base contient, en pourcent en masse :
Co : 0,01 à 0,5 % ; et/ou
Sn : 0,001 à 0,1 %.
